Europäisches Patentamt

(19) European Patent Office    (11) Publication number: **0 111 077**

Office européen des brevets    **B1**

(12) **EUROPEAN PATENT SPECIFICATION**

(45) Date of publication of patent specification: **03.12.86**    (51) Int. Cl.⁴: **C 09 J 5/00**

(21) Application number: **83109606.0**

(22) Date of filing: **27.09.83**

(54) **Device for heat-bonding utilizing temperature-controlled pressure.**

(30) Priority: **13.12.82 US 449111**

(43) Date of publication of application:
**20.06.84 Bulletin 84/25**

(45) Publication of the grant of the patent:
**03.12.86 Bulletin 86/49**

(84) Designated Contracting States:
**DE FR GB**

(56) References cited:
**GB-A- 884 920**
**US-A-3 664 902**
**US-A-3 968 282**

(73) Proprietor: **International Business Machines Corporation**
**Old Orchard Road**
**Armonk, N.Y. 10504 (US)**

(72) Inventor: **Bracke, Helmut Gustav**
**3819 Columbia Drive**
**Longmont Colorado 80501 (US)**
Inventor: **Ehn, Dean Stewart**
**3005 15th Street**
**Boulder Colorado 80302 (US)**

(74) Representative: **Bonin, Jean-Jacques**
**Compagnie IBM France Département de Propriété Intellectuelle**
**F-06610 La Gaude (FR)**

Courier Press, Leamington Spa, England.

# Description

This invention relates to heat-bonding and heat-activated adhesive bonding processes and, particularly, to controlling pressure applied during a heat-bonding process.

When bonding surfaces together with adhesives using heat, it is usually necessary to apply pressure to force the surfaces against one another. The pressure assists in evenly distributing the adhesive, which may be sprayed on the surfaces, applied as a dry film, applied with a brush, or sprinkled on in dry form.

Serious problems in applying the pressure arise when at least one of the surfaces is very thin or easily deformable and the surfaces to be bonded must be maintained within close tolerances of flatness and parallelism. An example, for illustrative and descriptive purposes, is the bonding of nickel stampers to solid steel backing plates to permit video disks to be produced from the stampers. Typically, the stamper plate should be flat and parallel to a tolerance of 0.005 mm after bonding.

During the bonding process, application of even pressure at a controlled rate results in low stress bonding, permitting extremely flat and parallel bonds.

Prior art procedures, including deformable pressing, failed to hold the stamper firmly enough in long run production and caused dimpling problems, even with highly polished tooling used for backing.

In this example, the surface of the stamper must be preserved because it contains microrelief structure, electrically formed, which can be easily damaged.

Background Art

U.S. Patent No. 3,650,021 shows a molding method using an outer shell and inner core, the material to be molded being disposed between the shell and core. The materials comprising the shell and core are selected so that the core has a higher coefficient of expansion than the shell. As the assembly is heated, the core expands faster than the shell, applying pressure on the molding material against the shell.

U.S. Patent No. 3,818,823 shows a vacuum-operated nonporous blanket that is pulled down onto a platen. A dome overlies the platen and is sealed around the platen covered by the vacuum openings. The interior of the dome is then pressurized to exert pressure on the substances being transferred, e.g., a printed circuit on one substrate onto a more permanent base or substrate. The patent does not teach the basic invention of this disclosure since the pressure-exerting means is vacuum-pressure operated, not temperature activated. Furthermore, it is deformable in contrast to the relative nondeforming pressure according to this disclosure.

U.S. Patent No. 4,288,481 shows the impressing of a satin finish on the thermoplastic foil of a video disk prior to the latter being pressed between polished nickel stampers to impart the microrelief structure representing information or data that is to be recorded on the foil. The satin finish permits trapped air between the stampers and foil to escape during the stamping process. The pressure is applied by mechanically pressing between machined plates with a resilient compensator interposed between one of the machined plates and the adjacent stamper plate. The compensator is deformable, being made with a convex surface.

In U.S. Patent No. 3,664,902, an elastic body of curved surface area is used to bond large area slabs to substrates. Sufficient pressure is applied to flatten the body out over the entire slab being bonded to the substrate, thereby producing a pressure gradient that forces the bonding agent to flow towards the edges of the slab. The pressure is not supplied by the temperature coefficient of expansion of the elastic body which is an essential element of this invention.

U.S. Patent No. 3,968,282 shows a rubber (or rubber-like) pressure pad having a rim around its margin which is connected to the rest of the pad by an arcuate cross-sectional portion. The purpose is to enable deep drawing of open, flat-formed articles, or thin-walled pressed sheet metal parts. The pressure pad tends to adapt itself to the mold more readily than pressure pads without the flexible rim.

An article, "Bonding Process," by W. R. Grossman and A. E. Hahn, Jr., *IBM Technical Disclosure Bulletin,* Vol. 14, No. 12, May 1972, p. 3776, discloses bonding webs under roller pressure.

These prior art references teach various ways of applying pressure, uniformly or nonuniformly, to form or to bond materials. This prior art does not, however, suggest or show the invention shown and described herein.

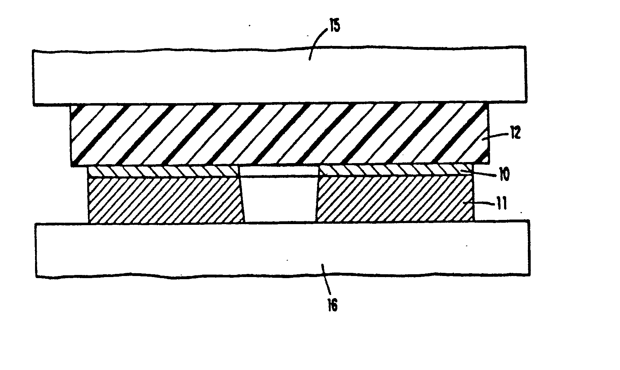

Brief Description of the Drawing

The figure is a cross-sectional view of an assembly arrangement for heat-bonding according to the invention.

Disclosure of the Invention

In accordance with the invention, two items having surfaces to be bonded together are held together with a heat-bonding adhesive distributed between the surfaces to be bonded. At least one of the items is backed by a pressure-applying form comprising an elastomeric or synthetic polymer compound having a relatively high coefficient of heat expansion, a yield strength lower than that of the items to be bonded, and a deforming temperature higher than that required to activate the adhesive. The items and the backing form are held together in a holder while sufficient heat is applied to them to activate the adhesive.

This arrangement has the advantage of applying an even pressure which is controlled by the applied heat. The pressure limit is the compressive yield strength of the backing material. The backing material is hard enough so that its surfaces can be machined to provide a flat or conforming fit. By providing a conforming fit, lateral support or pressure is not required, and will in fact preclude the ability to limit the applied pressure. The material is confined in two dimensions and free in the third so the polymer, which can reach a quasi-fluid state, is free to expand in the third dimension once the compressive yield strength is reached.

Detailed Description

A cross-sectional view, not to scale, of a bonding set-up is shown in the figure. Typically, the electro-formed nickel stamper 10 is to be bonded to a stainless steel backing plate 11 so that the video disks can be manufactured from the stamper. The stainless steel backing plate provides stiffness during the manufacturing operation.

A backer 12 is placed between the stamper 10 and an upper holder 15. A lower holder 16 keeps the arrangement toether. The holders 15 and 16 are typically faces of a press or fixture having the same coefficient of expansion as the stamper plate and backing plate and are arranged so that the initial pressure holding the assembly can be varied. These materials do not transmit stress to the bonded assembly.

A heat-bonding adhesive is disposed and distributed between the stamper 10 and the stainless steel backing plate 11 before the parts are assembled as shown. The adhesive can be a "B-stage adhesive" which is a dry film at room temperature, permitting pressure alignment of the assembly prior to making the heat-activated bond.

The backer 12 is a material having certain properties. It has a coefficient of heat expansion that is relatively higher than the other components in the assembly. When the assembly is heated to activate the heat-bonding adhesive, the material expands volumetrically by a predetermined amount which is added to the initial pressure exerted by the holders 15 and 16. Since it is, however, confined in only two dimensions, the pressure increases to the compressive yield strength of the polymer and then the polymer expands in the unconstrained dimension. The pressure exerted on the parts being bonded at the final operating temperature can be supplied to almost any desired degree of accuracy and precision. For example, knowing the final temperature and the coefficient of heat expansion, the thickness of the backer 12 can be controlled to exert the incremental pressure desired.

The backer material must have a yield strength lower than the other components of the assembly. This permits the backer 12 to yield to minor imperfections in the surfaces being bonded without damaging the parts being bonded. The yield strength will be the maximum pressure exerted during the bonding process. The material must be strong enough, however, to permit machining and retain its desired shape while exerting pressure.

The deforming temperature of the backer material must be higher than that reached during the bonding process. By this is meant that the maximum temperature reached during the heat-bonding process is substantially below that at which the backer 12 begins to enter the liquid state. The backer must not be susceptible to permanent deformation at the maximum temperatures attained.

In the illustrative example being described, the preferable embodiment of the backer was found to be one of the tetrafluoroethylene resins or one of the fluorinated ethylene-propylene resins. Depending on the temperatures and pressure required as well as the materials being bonded, it is anticipated that other materials, such as a member of the synthetic polyamide compounds, may be preferable.

Claims

1. A device for heat-bonding the surfaces of two items under pressure comprising:
two items having surfaces to be bonded to one another;
heat-bonding adhesive means disposed between said surfaces;
holding means for holding said items together during a heat bonding process;
pressure-applying means comprising an elastomeric or synthetic resin polymer having a coefficient of heat expansion higher than and a compressive yield strength lower than that of said items to be bonded, and a deforming temperature higher than the temperature required for the bonding process; and
means for applying heat to said device to raise the temperatures thereof to the required bonding temperature.

2. The device of Claim 1 wherein the pressure-applying means comprises an element of the family of tetrafluoroethylene resins.

3. The device of Claim 1 wherein said pressure applying means comprises an element of the family of fluorinated ethylene-propylene resins.

4. A method for bonding surfaces of two items under pressure comprising the steps of:
placing a heat-bonding adhesive on at least one of the two surfaces to be bonded;
positioning against one another the surfaces to be bonded with the adhesive disposed therebetween;
holding said positioned surfaces in holding device whereby at least one of said items is supported by a backer comprising an elastomeric or synthetic resin polymer having a coefficient of heat expansion higher than and a yield strength lower than that of said items to be bonded, and a higher deforming temperature than the temperature required for the bonding process; and
applying sufficient heat to the device to activate the heat-bonding adhesive.

5. The method of Claim 4 wherein said backer comprises an element of the family of tetrafluoroethylene resins.

6. The method of Claim 4 wherein said backer comprises an element of the family of fluorinated ethylene-propylene resins.

## Patentansprüche

1. Vorrichtung zum Warmkleben der Oberflächen zweier unter Druck stehender Teile, bestehend aus:

zwei Teilen, deren Oberflächen zusammenzukleben sind;

Warmkleben eines zwischen den genannten Oberflächen angeordneten Haftmittels;

Haltemittel, um die genannten Teile während des Warmklebverfahrens zusammenzuhalten;

Druckaufbringmittel mit einem elastomeren oder synthetischen Harzpolymer, dessen Wärmeausdehnungskoeffizient grösser und seine Druckfestigkeit kleiner als die der zu klebenden Teile ist während seine Verformungstemperatur höher als die Temperatur des Klebeverfahrens ist; und

Mittel, um die genannte Vorrichtung auf eine Temperatur zu bringen, die der erforderlichen Klebetemperatur entspricht.

2. Vorrichtung nach Anspruch 1, in der das Druckaufbringmittel ein Element der Familie der Tetrafluoräthylenharze aufweist.

3. Vorrichtung nach Anspruch 1, in der das genannte Druckaufbringmittel ein Element der Familie der fluorierten Äthylenpropylenharze aufweist.

4. Methode, um die Oberflächen zweier Teile unter Druck zusammenzukleben, wobei folgende Schritte durchgeführt werden:

Aufbringen eines warmklebbaren Haftmittels auf zumindest einer der beiden zusammenzuklebenden Oberflächen;

Gegeneinanderdrücken der zu klebenden Oberflächen, während das Haftmittel zwischen ihnen angeordnet ist;

Halten der beiden genannten gegeneinandergedrückten Oberflächen in einer Haltevorrichtung, wobei zumindest eines der genannten Teile von einer Versteifung gehalten wird, die ein elastomeres oder synthetisches Harzpolymer aufweist, dessen Wärmeausdehnungskoeffizient grösser und seine Druckfestigkeit kleiner als die der zu klebenden Teile ist während seine Verformungstemperatur höher als die für das Klebeverfahren erforderliche Temperatur ist, und

Aufbringen von Wärme, die dazu ausreicht, die Vorrichtung auf eine Temperatur zu bringen, bei der das warmhärtbare Haftmittel aktiviert wird.

5. Methode nach Anspruch 4, in der die genannte Versteifung ein Element der Familie der Tetrafluoräthylenharze aufweist.

6. Methode nach Anspruch 4, in der die genannte Versteifung ein Element der Familie der fluorierten Äthylenpropylenharze aufweist.

## Revendications

1. Un dispositif pour le collage thermique des surfaces de deux éléments sous pression, comprenant:

deux éléments ayant des surfaces à coller l'une à l'autre,

des moyens thermiquement adhésifs disposés entre lesdites surfaces,

des moyens de retenue pour maintenir lesdits éléments ensemble pendant l'exécution d'un procédé de collage thermique,

des moyens d'application de pression comprenant un polymère de résine élastomère ou synthétique ayant un coefficient de dilatation thermique supérieur à, et une limite de résistance à la compression inférieure à celui et celle desdits deux éléments à coller, et une température de déformation supérieure à la température requise pour le procédé de collage, et

des moyens d'application thermique audit dispositif pour élever les températures de celui ci à la température de collage requise.

2. Le dispositif de la revendication 1 dans lequel les moyens d'application de pression comprennent un élément de la famille des résines de tétrafluoroéthylène.

3. Le dispositif de la revendication 1 dans lequel lesdits moyens d'application de pression comprennent un élément de la famille des résines d'éthylène-propylène fluorées.

4. Une procédé de collage des surfaces de deux éléments sous pression comprenant les étapes suivantes:

la disposition de l'adhésif thermiquement collant sur au moins l'une des deux surfaces à coller,

l'application l'une contre l'autre des surfaces à coller, l'adhésif étant disposé entre elles,

le maintien desdites surfaces appliquées l'une contre l'autre dans le dispositif de retenue, ce qui permet à au moins l'un desdits éléments d'être retenu par un élément de support comprenant un polymère de résine élastomère ou synthétique ayant un coefficient de dilatation thermique supérieur à, et une limite de résistance inférieure à celui et celle desdits éléments à coller, et une température de déformation plus élevée que la température requise pour l'exécution du procédé de collage, et

l'application d'une chaleur suffisante au dispositif pour activer l'adhésif sensible à la chaleur.

5. Le procédé de la revendication 4 dans lequel ledit élément de support comprend un élément de la famille des résines de tétrafluoroéthylène.

6. Le procédé de la revendication 4 dans lequel ledit élément de support comprend un élément de la famille des résines d'éthylène-propylène fluorées.